# DEMANDE DE BREVET EUROPEEN

(11) **EP 2 625 990 A1**
(43) Date de publication de la demande: **14.08.2013**
(21) Numéro de dépôt: 13154123.7
(22) Date de dépôt: 06.02.2013
(51) Int. Cl.: A47J 37/06, H05B 3/74

(54) **Appareil à crêpes**

(30) Priorité: 07.02.2012 FR 1251113
(71) Demandeur: Roller Grill, 28800 Bonneval (FR)
(72) Inventeur: Grenon, Stéphane, 28800 Bonneval (FR)
(74) Mandataire: Chauveau, Ariane

(57) **Abrégé**

L'invention se rapporte à un appareil (10) à crêpes comportant :
- un corps (11), un plancher (12) dudit corps étant apte à être posé sur un plan de travail horizontal ;
- une plaque (20) vitrocéramique de forme sensiblement circulaire, disposée sur une face supérieure (22) du corps, ladite face étant disposée sensiblement parallèlement au plancher dudit corps ;
- un élément (31) chauffant la plaque par rayonnement, disposé sur un foyer (25), ledit foyer comportant un revêtement (27) réfléchissant les rayons vers la plaque,
ledit élément chauffant et ledit foyer étant disposés sensiblement parallèlement à la plaque, entre ladite plaque et le plancher du corps, ledit foyer comportant une base (26), parallèle à la plaque et formant un polygone sensiblement régulier à au moins cinq côtés, une surface dudit polygone étant contenue dans une surface (29) de la plaque.

## Description

La présente invention se rapporte à un appareil culinaire pour la cuisson de crêpes. Un tel appareil convient aussi bien à l'usage de professionnels que de particuliers.

Les appareils à crêpes sont connus de l'état de la technique. Ils comportent de manière classique un corps avec un plancher apte à être posé sur un plan de travail horizontal, une plaque de cuisson circulaire disposée sur une face supérieure du corps, et un élément chauffant ladite plaque de cuisson. La plaque de cuisson est typiquement en fonte et l'élément chauffant peut être un élément chauffant électrique ou un brûleur à gaz.

Il est également connu de l'état de la technique des cuisinières ou autres appareils de cuisson munis de plaques de cuisson en vitrocéramique. De telles plaques présentent par exemple l'avantage d'être facilement entretenues.

Une plaque de cuisson en vitrocéramique est chauffée par un élément rayonnant, tel qu'une résistance électrique ou une lampe à filament de tungstène. De manière classique, ledit élément rayonnant est logé dans un foyer comprenant une paroi formée dans un matériau isolant et réfractaire à la chaleur, et comportant une surface réfléchissante. Ladite surface réfléchissante permet de réfléchir vers la plaque de cuisson les rayons émis par l'élément rayonnant en direction de ladite surface. Le foyer peut dans ce cas prendre une forme quelconque, bien qu'une forme carrée ou rectangulaire soit préférée pour des raisons de moindre coût.

Par conséquent, l'adaptation d'une plaque de cuisson en vitrocéramique sur un appareil à crêpes classique nécessite de remplacer l'élément chauffant usuel par un élément rayonnant, logé dans un foyer comportant les caractéristiques précédemment décrites.

Cependant, il est préférable dans le cas d'un appareil à crêpes d'adapter la forme du foyer à la forme de la plaque de cuisson. En effet, un foyer carré dont une surface serait contenue dans une surface de la plaque entraînerait une répartition inégale de la chaleur sur ladite plaque, avec notamment des zones non chauffées. Il faudrait donc que la surface du foyer déborde de la surface de la plaque, ce qui entraînerait alors d'importantes pertes de chaleur, puisqu'une partie des rayons réfléchis par le foyer viendrait chauffer le corps de l'appareil à proximité de la plaque.

En conséquence, un foyer de forme circulaire serait une solution optimale pour avoir une répartition de la chaleur parfaitement homogène sur la plaque circulaire.

Cependant, la fabrication d'un tel foyer représente des coûts trop élevés pour que cette solution soit mise en oeuvre.

La présente invention a pour but de proposer une solution alternative, permettant d'avoir une répartition de la chaleur la plus homogène possible sur la plaque, tout en limitant au maximum les pertes de chaleur.

Plus précisément, un objet de la présente invention est un appareil à crêpes comportant un corps, un plancher dudit corps étant apte à être posé sur un plan de travail sensiblement horizontal, et une plaque vitrocéramique de forme sensiblement circulaire, formant une face supérieure du corps. Ladite face est disposée sensiblement parallèlement au plancher dudit corps. L'appareil comporte en outre un élément chauffant la plaque par rayonnement, disposé sur un foyer, ledit élément chauffant et ledit foyer étant disposés sensiblement parallèlement à la plaque, entre ladite plaque et le plancher du corps. Le foyer comporte un revêtement réfléchissant les rayons vers la plaque. Le foyer comporte en outre une base formant un polygone sensiblement régulier à au moins cinq côtés, une surface dudit polygone étant contenue dans une surface de la plaque.

Un tel appareil présente l'avantage d'avoir un foyer dont la forme géométrique est plus proche de la forme circulaire que les formes carrées ou rectangulaires connues de l'état de la technique. Une telle forme permet d'avoir une répartition de la chaleur la plus homogène possible sur une plaque de cuisson circulaire, tout en limitant les pertes.

Préférentiellement, le foyer comporte une enveloppe métallique externe dont un rebord forme une saillie par rapport à la base, une face interne dudit rebord étant recouverte d'une paroi thermiquement isolante.

L'avantage d'un tel dispositif est que la forme polygonale de la base permet de former le rebord et la paroi isolante plus facilement et à moindre coût qu'une forme circulaire.

Préférentiellement, la base du foyer comporte au moins six côtés.

Plus préférentiellement, la base du foyer comporte huit côtés.

Un tel appareil présente l'avantage d'avoir un foyer dont la forme permet de réaliser le meilleur compromis entre les coûts de fabrication dudit foyer et une répartition de la température la plus homogène possible, tout en limitant les pertes.

Préférentiellement, l'élément chauffant est disposé en spirale.

Une telle disposition de l'élément chauffant présente l'avantage de fournir une répartition de la chaleur sensiblement homogène sur la plaque.

Préférentiellement, l'élément chauffant est une résistance électrique ou une lampe à filament de tungstène.

L'invention sera mieux comprise à la lecture de la description qui suit et à l'examen des figures qui l'accompagnent. Celles-ci sont données à titre indicatif et nullement limitatif de l'invention. Les figures montrent :
- Figure 1 : vue en perspective éclatée d'un appareil à crêpes selon un mode de réalisation de l'invention ;
- Figure 2 : vue en coupe d'un foyer de l'appareil à crêpes, sur lequel est disposé un élément chauffant, selon le mode de réalisation de l'invention présenté dans la figure 1.

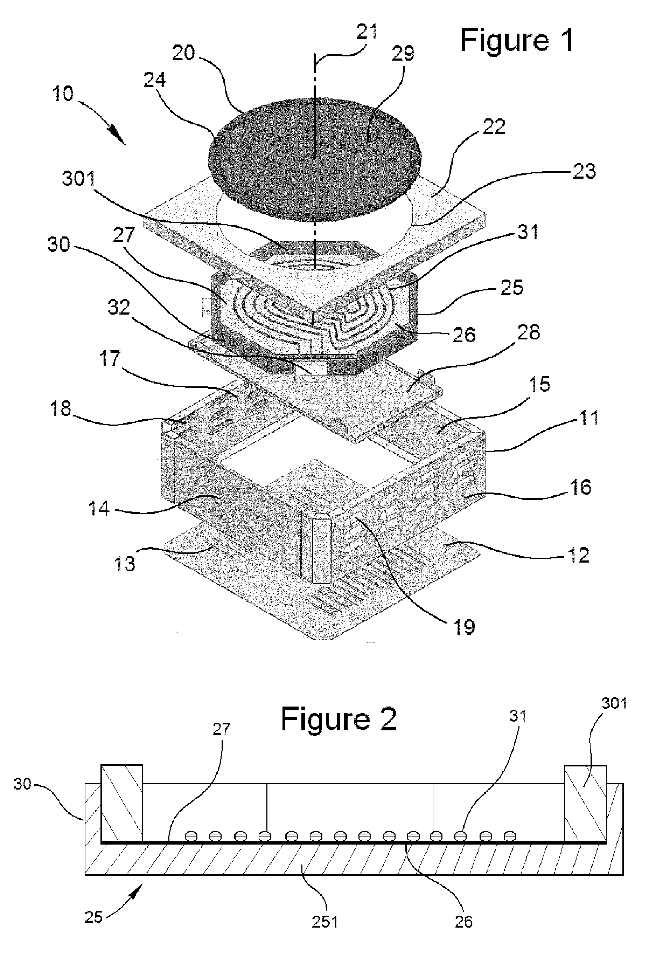

La figure 1 montre une vue en perspective éclatée d'un appareil 10 à crêpes selon un mode de réalisation de l'invention. Dans la présente description, les termes « supérieur », « horizontal », et « vertical » s'entendent lorsque l'appareil 10 est en position de fonctionnement.

L'appareil 10 comporte un corps 11. Ledit corps 11 est creux, de sorte à accueillir l'ensemble des pièces que comporte ledit appareil 10.

Selon le mode de réalisation présenté dans la figure 1, le corps 11 est sensiblement parallélépipédique.

Selon un autre mode de réalisation de l'invention, le corps 11 est sensiblement cylindrique.

Le corps 11 comporte un plancher 12, apte à être posé sur un plan de travail (non représenté) horizontal. Le plancher 12 est muni de pieds (non représentés), disposés aux quatre coins dudit plancher 12, de sorte à ménager un espace entre ledit plancher 12 et le plan de travail.

Le plancher 12 comporte en outre des fentes 13. Lesdites fentes 13 permettent de réaliser une entrée d'air à température ambiante dans l'appareil 10, de sorte à ventiler ledit appareil 10.

Le corps 11 comporte également des parois latérales (14, 15, 16, 17). Une première paroi latérale 14 est apte à recevoir un moyen de réglage (non représenté) d'une température de cuisson. Une deuxième paroi latérale 15, disposée sensiblement parallèlement à la première paroi latérale 14, est apte à recevoir un câble électrique (non représenté) muni d'une prise, de sorte que l'appareil 10 soit alimenté en courant électrique.

Une troisième et une quatrième paroi latérale (16, 17), disposées sensiblement parallèlement l'une par rapport à l'autre, comportent des perforations 18, de sorte à évacuer l'air chaud contenu dans l'appareil 10, lors du fonctionnement dudit appareil 10. Préférentiellement, lesdites perforations 18 sont recouvertes à l'extérieur du corps 11 d'une surface 19 sensiblement bombée, disposée de sorte à diriger l'air sortant par lesdites perforations 18 vers le plan de travail. Ainsi, l'appareil 10 est ventilé de la manière suivante : de l'air à température ambiante entre dans l'appareil 10 par les fentes 13, tandis que l'air contenu dans l'appareil 10 et chauffé lors du fonctionnement dudit appareil 10 sort par les perforations 18. Ceci permet d'éviter la surchauffe du corps 11 de l'appareil 10, lors du fonctionnement dudit appareil 10, pouvant entraîner des risques de brûlures pour un utilisateur.

L'appareil 10 comporte en outre une plaque 20 de cuisson en vitrocéramique, de forme sensiblement circulaire. La plaque 20 est disposée selon un axe 21, sensiblement vertical.

Selon le mode de réalisation de l'invention présenté dans la figure 1, la plaque 20 est disposée sur une face supérieure 22 du corps 11, disposée sensiblement parallèlement au plancher 12. Ladite face supérieure 22 comporte un orifice 23, disposé selon l'axe 21. Un diamètre de l'orifice 23 est sensiblement inférieur à un diamètre de la plaque 20, de sorte qu'un bord 24 de la plaque 20 repose sur la face supérieure 22.

Selon un autre mode de réalisation de l'invention, la plaque 20 forme la face supérieure 22 du corps 11, ledit corps 11 étant alors cylindrique.

L'appareil 10 comporte également un foyer 25, dont la figure 2 représente une vue en coupe. Le foyer 25 comporte une base 26 sensiblement plane, qui forme un polygone sensiblement régulier à au moins cinq côtés, ledit polygone s'inscrivant dans un cercle. Un diamètre dudit cercle est sensiblement inférieur au diamètre de la plaque 20. De préférence, le diamètre dudit cercle est sensiblement égal au diamètre de l'orifice 23. Selon un mode de réalisation préférentiel de l'invention, le foyer 25 comporte huit côtés, de sorte à approcher une forme circulaire.

La base 26 du foyer 25 est recouverte d'une surface 27 apte à réfléchir des rayonnements infrarouges.

Le foyer 25 est monté sur un support 28 sensiblement plan, fixé au corps 11. Le foyer 25 et le support 28 sont disposés sensiblement parallèlement au plancher 12, entre ledit plancher 12 et la plaque 20, de sorte que la surface 27 réfléchissante dudit foyer 25 soit orientée en direction de la plaque 20 et que ledit foyer 25 soit disposé selon l'axe 21. De cette manière, une surface de la base 26 polygonale est contenue dans une surface 29 de la plaque 20.

Le foyer 25 comporte en outre un rebord 30 en saillie, disposé sensiblement perpendiculairement à un plan de la base 26. Ledit rebord 30 s'étend en direction de la plaque 20.

Avant la mise en forme du foyer 25, une enveloppe 251 externe métallique dudit foyer 25 se présente sous une forme sensiblement plane, comportant la base 26 polygonale et des pattes s'étendant sensiblement perpendiculairement à chaque côté de la base 26 polygonale. Le rebord 30 du foyer 25 est alors formé par pliage desdites pattes.

Ainsi, la forme polygonale de la base 26 du foyer 25 présente l'avantage de nécessiter la réalisation du rebord 30 dudit foyer 25 par pliage des pattes de l'enveloppe 251, et non par emboutissage comme cela serait le cas avec une base 26 circulaire. En effet, l'emboutissage d'une pièce engendre un surcoût de production par rapport à au pliage d'une pièce métallique. Le foyer 25 est donc moins cher à fabriquer dans le cas d'une base 26 polygonale.

Une face interne du rebord 30 est recouverte d'une paroi 301 protectrice, formé dans un matériau isolant et réfractaire à la chaleur, comme par exemple de l'aggloméré de bois. La paroi 301 protectrice est collée au rebord 30 du foyer 25.

Selon un mode de réalisation préféré de l'invention, une hauteur de la paroi 301 protectrice est sensiblement supérieure à une hauteur du rebord 30 formé par les pattes de l'enveloppe 251.

La forme polygonale de la base 26 est également avantageuse en ce qui concerne la réalisation et la mise en place de la paroi 301 protectrice. En effet, dans le cas d'une base 26 circulaire, le collage du matériau isolant au rebord 30 nécessiterait l'utilisation d'un outillage spécifique et coûteux.

Le foyer 25 accueille sur la surface 27 réfléchissante un élément 31 chauffant la plaque 20 par rayonnement infrarouge. L'élément 31 est par exemple une résistance électrique ou une lampe à filament de tungstène.

Selon le mode de réalisation présenté dans la figure 1, l'élément 31 est disposé en spirale sur la base 26 du foyer 25, de sorte à chauffer la plaque 20 de la manière la plus homogène possible. Cependant, l'élément 31 peut décrire d'autres motifs.

L'élément 31 est raccordé à au moins un connecteur 32, ledit connecteur 32 étant relié au moyen de réglage de la température de cuisson et au câble électrique.

Lors du fonctionnement de l'appareil 10, l'élément 31 rayonne en direction de la plaque 20, de la base 26 du foyer 25 et du rebord 30 dudit foyer 25. Les rayons émis par l'élément 31 en direction de la plaque 20 chauffent directement ladite plaque 20. Les rayons émis par l'élément 31 en direction du rebord 30 sont absorbés par la paroi 301 protectrice recouvrant ledit rebord 30, limitant ainsi la surchauffe du rebord 30 et des parois latérales (14, 15, 16, 17) du corps 11. Les rayons émis par l'élément 31 en direction de la base 26 du foyer 25 sont réfléchis par la surface 27 réfléchissante en direction de la plaque 20, de sorte à participer au chauffage de ladite plaque, et du rebord 30, où lesdits rayons sont absorbés par la paroi 301 protectrice.

Ainsi, dans la mesure où la forme polygonale de la base 26 du foyer 25 s'approche d'une forme circulaire, l'émission des rayons réfléchis par la surface 27 réfléchissante vers la plaque 20 est sensiblement uniforme sur toute la surface 29 de ladite plaque 20, fournissant de cette manière une répartition sensiblement homogène de température de la plaque 20 sur toute la surface 29 de ladite plaque 20.

De plus, la surface de la base 26 du foyer 25 étant contenue dans la surface 29 de la plaque 20, le rayonnement est limité en dehors de la plaque 20. Cela permet de réduire la surchauffe du corps 11 de l'appareil 10, pouvant entraîner des risques de brûlures pour l'utilisateur.

## Revendications

1. Appareil (10) à crêpes comportant :
- un corps (11), un plancher (12) dudit corps étant apte à être posé sur un plan de travail horizontal ;
- une plaque (20) vitrocéramique de forme sensiblement circulaire, disposée sur une face supérieure (22) du corps, ladite face étant disposée sensiblement parallèlement au plancher dudit corps ;
- un élément (31) chauffant la plaque par rayonnement, disposé sur un foyer (25), ledit foyer comportant un revêtement (27) réfléchissant les rayons vers la plaque,
ledit élément chauffant et ledit foyer étant disposés sensiblement parallèlement à la plaque, entre ladite plaque et le plancher du corps ;
ledit appareil étant **caractérisé en ce que** le foyer comporte en outre une base (26) parallèle à la plaque et formant un polygone sensiblement régulier à au moins cinq côtés, une surface dudit polygone étant contenue dans une surface (29) de la plaque.

2. Appareil selon la revendication 1, tel que le foyer comporte une enveloppe (251) métallique externe dont un rebord (30) forme une saillie par rapport à la base, une face interne dudit rebord étant recouverte d'une paroi (301) thermiquement isolante.

3. Appareil selon l'une des revendications 1 ou 2, tel que la base du foyer comporte au moins six côtés.

4. Appareil selon la revendication 3, tel que la base du foyer comporte huit côtés.

5. Appareil selon l'une des revendications 1 à 4, tel que l'élément chauffant est disposé en spirale.

6. Appareil selon l'une des revendications 1 à 5, tel que l'élément chauffant est une résistance électrique ou une lampe à filament de tungstène.
